(19) Europäisches Patentamt
European Patent Office
Office européen des brevets

(11) **EP 4 489 322 A1**

(12) **EUROPEAN PATENT APPLICATION**
published in accordance with Art. 153(4) EPC

(43) Date of publication:
**08.01.2025 Bulletin 2025/02**

(21) Application number: **22929304.8**

(22) Date of filing: **02.03.2022**

(51) International Patent Classification (IPC):
*H04B 7/06* *(2006.01)*

(52) Cooperative Patent Classification (CPC):
**H04B 7/06**

(86) International application number:
**PCT/CN2022/078907**

(87) International publication number:
**WO 2023/164853 (07.09.2023 Gazette 2023/36)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Beijing Xiaomi Mobile Software Co.,
Ltd.**
**Beijing 100085 (CN)**

(72) Inventor: **GAO, Xueyuan**
**Beijing 100085 (CN)**

(74) Representative: **Dehns Germany Partnerschaft
mbB**
**Theresienstraße 6-8**
**80333 München (DE)**

(54) **SRS SENDING METHOD AND APPARATUS, SRS RECEIVING METHOD AND APPARATUS, DEVICE, MEDIUM, AND PRODUCT**

(57)     The present disclosure belongs to the field of communication, and disclosed are an SRS sending method and apparatus, an SRS receiving method and apparatus, a device, a medium, and a product. The method comprises: configuring and sending SRSs of 8 antenna ports on one SRS resource, the eight antenna ports being mapped on a same physical resource. The present method is used for supporting implementation of related function when a terminal uses eight transmit antenna ports.

> configure and send an SRS of 8 antenna ports on one SRS resource, in which the 8 antenna ports are mapped on a same physical resource — 210

FIG. 2

**Description**

**TECHNICAL FIELD**

The disclosure relates to the field of communications, particularly to a method and an apparatus for sending a sounding reference signal (SRS), a method and an apparatus for receiving an SRS, a device, a medium and a product.

**BACKGROUND**

In a 5th Generation (5G) New Radio system, an uplink Sounding Reference Signal (SRS) may be used to measure and estimate channel quality of an uplink channel.
In a process of sending the uplink SRS, a plurality of antenna ports may be configured for a user equipment (UE), and the UE supports the transmission of the SRS for up to 4 antenna ports.

**SUMMARY**

Embodiments of the disclosure provide a method and an apparatus for sending a Sounding Reference Signal (SRS), a method and an apparatus for receiving an SRS, a device, a medium, and a product. The technical solution is as follows:
According to an aspect of the disclosure, a method for sending an SRS is provided. The method is performed by a terminal. The method includes:
configuring and sending an SRS of 8 antenna ports on one SRS resource, in which the 8 antenna ports are mapped onto same physical resources.
According to another aspect of the disclosure, a method for receiving an SRS is provided. The method is performed by a network device. The method includes:
receiving an SRS of 8 antenna ports sent, on one SRS resource, by a terminal, in which the 8 antenna ports are mapped onto same physical resources.
According to another aspect of the disclosure, an apparatus for sending an SRS is provided. The apparatus includes:
a first sending module, configured to configure and send an SRS of 8 antenna ports on one SRS resource, in which the 8 antenna ports are mapped onto same physical resources.
According to another aspect of the disclosure, an apparatus for receiving an SRS is provided. The apparatus includes:
a second receiving module, configured to receive an SRS of 8 antenna ports sent, on one SRS resource, by a terminal, in which the 8 antenna ports are mapped onto same physical resources.
According to another aspect of the disclosure, a terminal is provided. The terminal includes:

a processor; and
a transceiver connected to the processor;
in which the processor is configured to load and execute executable instructions to perform the method for sending an SRS according to the foregoing aspects.

According to another aspect of the disclosure, a network device is provided. The network device includes:

a processor; and
a transceiver connected to the processor;
in which the processor is configured to load and execute executable instructions to perform the method for receiving an SRS according to the foregoing aspects.

According to another aspect of the disclosure, a computer readable storage medium is provided. The computer readable storage medium has at least one instruction, at least one program, a code set or an instruction set stored thereon. The at least one instruction, the at least one program, the code set or the instruction set are loaded and executed by the processor to oerfim the method for sending an SRS or the method for receiving an SRS according to the foregoing aspects.
According to another aspect of the disclosure, a computer program product (or a computer program) is provided. The computer program product includes computer instructions. The computer instructions are stored in a computer readable storage medium. A processor of a computer device reads the computer instructions from the computer readable storage medium. The processor executes the computer instructions, so that the computer device performs the method for sending an SRS or the method for receiving an SRS according to the foregoing aspects.

The technical solution according to embodiments of the disclosure may achieve the following beneficial effects.

In the method for sending an SRS, the terminal may map the eight antenna ports onto the same physical resources, configure and send the SRS of the eight antenna ports on one SRS resource. The method is used to support the implementation of related functions in the case that the terminal uses eight transmit/sending antenna ports. For example, the method is used to support the codebook based uplink channel quality detection in the case that the terminal uses the eight transmit/sending antenna ports, support the non-codebook based uplink channel quality detection in the case that the terminal uses the eight transmit/sending antenna ports, or support the downlink channel quality detection when performing the antenna switching in the case that the terminal uses the eight transmit/sending antenna ports.

It is understandable that the above general descriptions and following detailed descriptions are only illustrative and descriptive, and may not be a limitation of the disclosure.

## BRIEF DESCRIPTION OF THE DRAWINGS

In order to explain the technical solutions in embodiments of the disclosure more clearly, the drawings described in embodiments will be briefly introduced below. Obviously, the drawings described as below are only some embodiments of the disclosure. Those skilled in the art may obtain other drawings from these drawings without creative work.

FIG. 1 is a block diagram illustrating a communication system according to an exemplary embodiment.
FIG. 2 is a flowchart illustrating a method for sending an SRS according to an exemplary embodiment.
FIG. 3 is a diagram illustrating mapping of SRS resources according to an exemplary embodiment.
FIG. 4 is a diagram illustrating mapping of SRS resources according to another exemplary embodiment.
FIG. 5 is a diagram illustrating mapping of SRS resources according to another exemplary embodiment.
FIG. 6 is a diagram illustrating mapping of SRS resources according to another exemplary embodiment.
FIG. 7 is a diagram illustrating mapping of SRS resources according to another exemplary embodiment.
FIG. 8 is a flowchart illustrating a method for receiving an SRS according to an exemplary embodiment.
FIG. 9 is a flowchart illustrating a method for configuring parameters according to an exemplary embodiment.
FIG. 10 is a block diagram illustrating an apparatus for sending an SRS according to an exemplary embodiment.
FIG. 11 is a block diagram illustrating an apparatus for receiving an SRS according to an exemplary embodiment.
FIG. 12 is a block diagram illustrating an apparatus for configuring parameters according to an exemplary embodiment.
FIG. 13 is a structural diagram illustrating a terminal according to an exemplary embodiment.
FIG. 14 is a structural diagram illustrating a network device according to an exemplary embodiment.

## DETAILED DESCRIPTION

The example embodiments will be described in detail here, and examples thereof are illustrated in the accompanying drawings. When the following descriptions are referred to the accompanying drawings, unless otherwise indicated, the same reference numerals in different drawings represent the same or similar elements. The implementations described in the following example embodiments do not represent all implementations consistent with the disclosure. Rather, they are merely examples of apparatuses and methods consistent with some aspects of the disclosure as detailed in the appended claims.

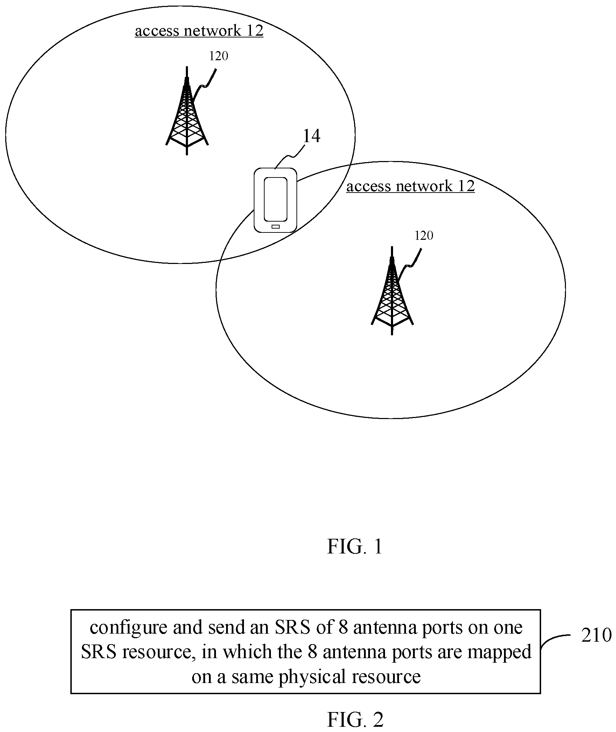

FIG. 1 illustrates a block diagram illustrating a communication system according to an exemplary embodiment of the disclosure. The communication system may include access networks 12 and a user terminal 14.

An access network 12 includes several network devices 120. The network device (also referred to as a network equipment) 120 may be a base station. The base station is a device deployed in an access network to provide a wireless communication function for the user terminal (referred to as "terminal" for short) 14. The base station may include various forms of macro base stations, micro base stations, relay stations, access points, and the like. In the system adopting different wireless access technologies, the name of a device with a base station function may vary. For example, in a long term evolution (LTE) system, it is referred to as an eNodeB or an eNB; in 5G NR system, it is referred to as a gNodeB or a gNB. With evolution of communications technology, the description of "base station" may vary. For ease of description of embodiments in the disclosure, devices for providing the wireless communication function for the user terminal 14 is collectively referred to as a network device.

The user terminal 14 may include all kinds of handheld devices with a wireless communication function, vehicle devices, wearable devices, computing devices or other processing devices connected to wireless modems, as well as various forms of user equipments (UEs), mobile stations (MS), terminal devices, and the like. For convenience of description, devices mentioned above is collectively referred to as a user terminal. The network device 120 and the user terminal 14 communicate with each other through some kind of air interface technology, for example, a Uu interface.

For example, there are two communication scenarios between the network device 120 and the user terminal 14: a downlink communication scenario and a downlink communication scenario. Uplink communication refers to sending signals to the network device 120, and downlink communication refers to sending signals to the user terminal 14.

The technical solutions of embodiments of the disclosure may be applied to various communication systems. For example, a global system of mobile communication (GSM) system, a code division multiple access (CDMA) system, a wideband code division multiple access (WCDMA) system, a general packet radio service (GPRS), a long term evolution (LTE) system, an LTE frequency division duplex (FDD) system, an LTE time division duplex (TDD) system, an advanced long term evolution (LTE-A) system, a new radio (NR) system, an evolved system of an NR system, an LTE-based access to unlicensed spectrum (LTE-U) system, an NR-based access to unlicensed spectrum (NR-U) system, a universal mobile telecommunication system (UMTS), a worldwide interoperability for microwave access (WiMAX) communication system, a wireless local area network (WLAN), a wireless fidelity (WiFi), a next-generation communication system or other communication system, and the like.

A number of connections supported by a traditional communication system is limited, and the connections are also easy to implement. However, with a development of the communication technology, a mobile communication system not only supports traditional communications, but also supports, for example, device-to-device (D2D) communication, machine-to-machine (M2M) communication, machine type communication (MTC), vehicle-to-vehicle (V2V) communication, and a vehicle-to-everything (V2X) system. Embodiments of the disclosure may also be applied to these communication systems.

FIG. 2 illustrates a flowchart illustrating a method for sending an SRS according to an exemplary embodiment of the disclosure. The method is performed by a terminal in the communication system illustrated in FIG. 1. The method includes the following.

At step 210, an SRS of 8 antenna ports are configured and sent on one SRS resource, and the eight antenna ports are mapped onto same physical resources.

In measureing quality of an uplink channel, the terminal maps one SRS resource on same physical resources (PRs) and configures and sends the SRS of the eight antenna ports on the SRS resource.

The above-mentioned "PR" means contiguous carrier resources in a frequency domain. One physical resource block (PRB) corresponds to 12 contiguous carriers in the frequency domain and 1 slot in a time domain.

In an embodiment, the uplink channel includes at least one of a Physical Uplink Control Channel (PUCCH) or a Physical Uplink Shared Channel (PUSCH). The terminal may map one SRS resource onto the PRs of the PUCCH and/or the PUSCH.

In an embodiment, the terminal maps one SRS resource onto the same physical resources based on configuration parameter(s). The configuration parameter(s) includes at least one of the following:

a transmission comb parameter $K_{TC}$;

a transmission comb offset value $\overline{k}_{TC}$;

a bandwidth parameter;

a cyclic shift parameter $n_{SRS}^{cs}$ ; and

a number of antenna ports $N_{ap}^{SRS}$ .

The transmission comb parameter $K_{TC}$ is used to indicate a comb-shaped structure of the SRS resource in the frequency domain. That is, it is not the case that the SRS resource is mapped onto contiguous subcarriers. The transmission comb parameter is represented by "comb", and adjacent Resource Element (RE) resources in the SRS resource are spaced by (comb-1) subcarriers. For example, when comb = 8, adjacent RE resources in one SRS resource are spaced by 7 subcarriers. The transmission comb offset value $\overline{k}_{TC}$ refers to an offset value for a subcarrier occupied by a first one of RE resource in one SRS resource, and the transmission comb offset value is a non-negative integer less than the transmission comb parameter. The bandwidth parameter means a bandwidth occupied by the SRS resource. The cyclic shift parameter means the number of bits of the cyclic shift for a sequence. The antenna port is a logical transmission channel defined by a reference signal, and the antenna port is mapped onto a physical antenna for signal transmission.

For example, the configuration parameter(s) may further include a length of a zadoff-chu (ZC) sequence. For example, the length of the ZC sequence refers to a numerical value length of the ZC sequence.

It is noteworthy that some or all of the above configuration parameter(s) are configured by the network device for the terminal; or some or all of the above configuration parameter(s) are defined by a protocol.

For example, the terminal generates 8 SRS sequences based on the ZC sequence and carries the SRS of the 8 antenna ports through the 8 SRS sequences. For example, the number of antenna ports of the SRS $N_{ap}^{SRS} = 8$ and the port numbers of the 8 antenna ports are $P_i = 1000 + i$, $i \in \{0, 1, 2, 3, 4, 5, 6, 7\}$.

For example, the 8 antenna ports may be antenna ports mapped onto a same antenna panel or different antenna panels. That is, the 8 antenna ports are antenna ports mapped onto M antenna panels, where M is a positive integer less than or equal to 8. For example, four first antenna ports in the 8 antenna ports are mapped onto a first antenna panel and four second antenna ports are mapped onto a second antenna panel.

For example, the terminal configures that one SRS resource occupies N consecutive Orthogonal Frequency-Division Multiplexing (OFDM) symbols, where N = {1, 2, 4}.

For example, the above-mentioned "function of the SRS resource" is at least one of the following:

a codebook;
anntenna switching; or
non-codebook.

The terminal may perform a codebook based uplink channel quality detection, a downlink channel quality detection when antenna switching is performed, or a non-codebook based uplink channel quality detection.

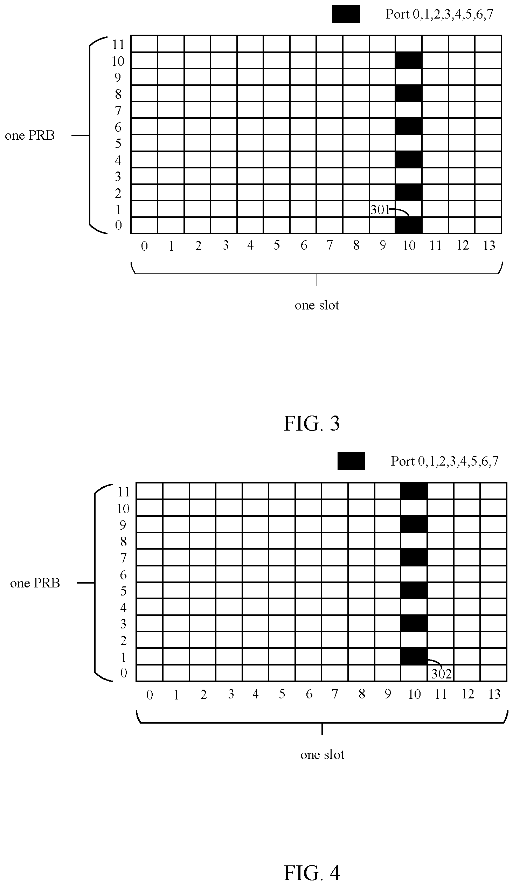

For example, as illustrated in FIG. 3, when the transmission comb parameter is equal to 2, the terminal maps one SRS resource onto one PRB. This SRS resource includes 6 RE resources 301, one RE resource 301 is determined in every two consecutive subcarriers, and two adjacent RE resources 301 are separated by one subcarrier. The 6 RE resources 301 each is located on a symbol 10 of one slot. When the transmission comb offset value is 0, the 6 RE resources 301 are respectively located on a subcarrier 0, a subcarrier 2, a subcarrier 4, a subcarrier 6, a subcarrier 8 and a subcarrier 10. The 8 antenna ports including a port 0, a port 1, a port 2, ..., a port 7 are mapped onto each RE resource 301. For example, a transmission comb resource in FIG. 3 may occupy 1 OFDM symbol.

In conclusion, with the method for sending an SRS according to embodiments, the terminal may map the 8 antenna ports onto the same physical resources, and configure and send the SRS of the 8 antenna ports on one SRS resource. The method is used to support the implementation of related functions when the terminal uses 8 transmit/sending antenna ports. For example, the method is used to support a codebook based uplink channel quality detection in the case that the terminal uses 8 transmit/sending antenna ports, sepport a non-codebook based uplink channel quality detection in the case that the terminal uses 8 transmit/sending antenna ports, or support a downlink channel quality detection when performing the antenna switching in the case that the terminal uses 8 transmit/sending antenna ports.

For example, a value range of the the transmission comb parameter $K_{TC}$ is {2, 4, 8, 12}. The following describes the cases of different values of $K_{TC}$.

- The transmission comb parameter $K_{TC}$ is equal to 2.

In this case, the transmission comb offset value $\overline{k}_{TC}$ corresponding to the SRS resource is a non-negative integer less than 2. For example, the transmission comb offset value $\overline{k}_{TC}$ may be equal to 0 or 1. As illustrated in FIG. 3, when the transmission comb parameter is equal to 2, two adjacent RE resources 301 are separated by one subcarrier, and the transmission comb offset value $\overline{k}_{TC}$ corresponding to the RE resource 301 is equal to 0. As illustrated in FIG. 4, when the transmission comb parameter is equal to 2, the terminal maps one SRS resource onto one PRB. This SRS resource includes 6 RE resources 302, one RE resource 302 is determined in every two consecutive subcarriers, and two adjacent RE resources 302 are separated by one subcarrier. The 6 RE resources 302 each is located on the symbol 10 of one slot. When the transmission comb offset value $\overline{k}_{TC}$ is equal to 1, the 6 RE resources 302 are respectively located on a subcarrier 1, a subcarrier 3, a subcarrier 5, a subcarrier 7, a subcarrier 9, and a subcarrier 11. The 8 antenna ports including the port 0, the port 1, the port 2, ..., the port 7 are mapped onto each RE resource 302. In an embodiment, a transmission comb parameter in FIG. 4 may occupy 1 OFDM symbol.

In an embodiment, a maximum number of cyclic shift parameters supported by the transmission comb parameter is 8, and a value range of the $n_{SRS}^{cs}$ is $n_{SRS}^{cs} \in \{0, 1, ..., n_{SRS}^{cs,max} - 1\}$. The terminal uses all of the 8 cyclic shift parameters to generate the SRS resource.

In an embodiment, the maximum number of the cyclic shift parameters supported by the transmission comb parameter is 12, and the value range of the $n_{SRS}^{cs}$ is $n_{SRS}^{cs} \in \{0, 1, ..., n_{SRS}^{cs,max} - 1\}$. The terminal uses some cycle shift parameters among the 12 cyclic shift parameters to generate the SRS resource, that is, 8 cyclic shift parameters in the 12 cyclic shift parameters are actually used to generate the SRS resource.

·The transmission comb parameter $K_{TC}$ is equal to 4.

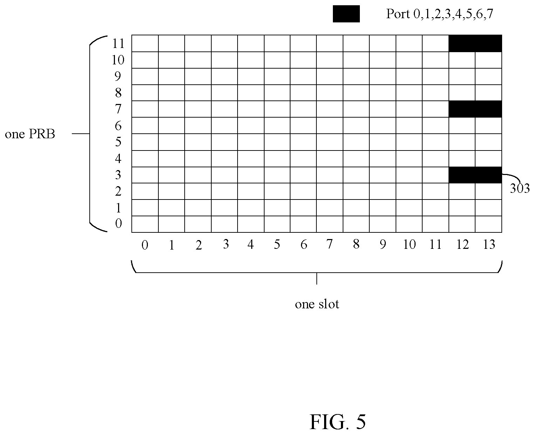

In this case, the transmission comb offset value $\overline{k}_{TC}$ corresponding to the SRS resource is a non-negative integer less than 4. For example, the transmission comb offset value $\overline{k}_{TC}$ may be equal to 0, 1, 2, or 4. As illustrated in FIG. 5, when the transmission comb parameter is equal to 4, the terminal maps one SRS resource onto one PRB. This SRS resource includes three groups of RE resources 303, one group of RE resources 303 is determined in every 4 consecutive subcarriers, and two adjacent groups of RE resources 303 are separated by 3 subcarriers. Each group of RE resources 303 includes two RE resources, and the three groups of RE resources 303 each is located on a symbol 12 and a symbol 13 of one slot. When the transmission comb offset value $\overline{k}_{TC}$ is equal to 3, the three groups of RE resources 303 are respectively located on the subcarrier 3, the subcarrier 7, and the subcarrier 11. The 8 antenna ports including the port 0, the port 1, the port 2, ..., the port 7 are mapped onto each RE resource 303. In an embodiment, the transmission comb resource in FIG. 5 may occupy 2 OFDM symbols.

In an embodiment, the maximum number of cyclic shift parameters supported by the transmission comb parameter is 8, and a value range of the $n_{SRS}^{cs}$ is $n_{SRS}^{cs} \in \{0, 1, ..., n_{SRS}^{cs,max} - 1\}$. The terminal uses all of the 8 cyclic shift parameters to generate the SRS resource.

In an embodiment, the maximum number of the cyclic shift parameters supported by the transmission comb parameter is 12, and the value range of the $n_{SRS}^{cs}$ is $n_{SRS}^{cs} \in \{0, 1, ..., n_{SRS}^{cs,max} - 1\}$. The terminal uses some cyclic shift parameters among 12 cyclic shift parameters to generate the SRS resource, that is, 8 cyclic shift parameters among the 12 cyclic shift parameters are actually used to generate the SRS resource.

In some other embodiments, when the transmission comb parameter is equal to 2 or 4, a bandwidth corresponding to the bandwidth parameter is greater than or equal to a bandwidth of 4 PRBs; or the bandwidth parameter is a multiple of the bandwidth of 4 PRBs; or the bandwidth corresponding to the bandwidth parameter is greater than or equal to a bandwidth of 6 PRBs; or the bandwidth parameter is a multiple of the bandwidth of 6 PRBs; or the bandwidth corresponding to the bandwidth parameter is greater than or equal to a bandwidth of 8 PRBs; or the bandwidth parameter is a multiple of the bandwidth of 8 PRBs.

·The transmission comb parameter $K_{TC}$ is equal to 8.

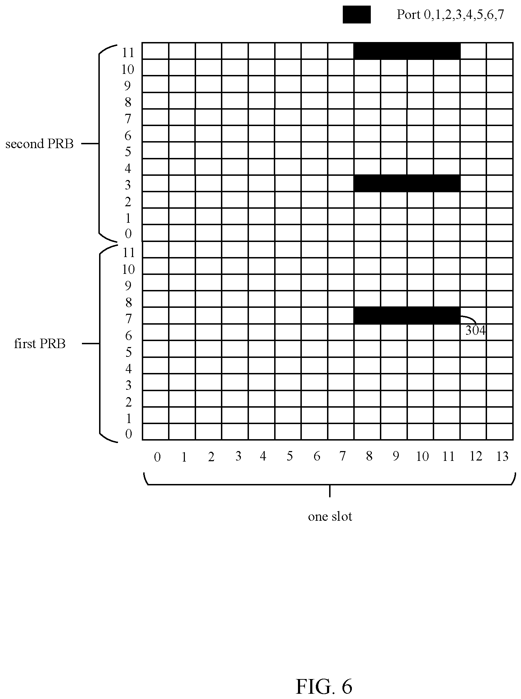

In this case, the value of the transmission comb offset value $\overline{k}_{TC}$ corresponding to the SRS resource is a non-negative integer less than 8. For example, the transmission comb offset value $\overline{k}_{TC}$ may be equal to 0, 1, 2, ..., or 7. As illustrated in FIG. 6, when the transmission comb parameter is equal to 8, the terminal maps one SRS resource onto two PRBs. This SRS resource includes three groups of RE resources 304, one group of RE resources 304 is determined in every 8 consecutive subcarriers, and two adjacent groups of RE resources 304 are separated by 7 subcarriers. Each group of RE resources 304 includes 4 RE resources, and the three groups of RE resources 304 each is located on a symbol 8, a symbol 9, the symbol 10, and a symbol 11 of one slot. When the transmission comb offset value $\overline{k}_{TC}$ is equal to 7, the three groups of RE resources 304 are respectively located on a subcarrier 7 of a first PRB, a subcarrier 3 of a second PRB and a subcarrier 11 of the second PRB. The 8 antenna ports including the port 0, the port 1, the port 2, ..., the port 7 are mapped onto each group of RE resources 304. In an embodiment, the transmission comb resource in FIG. 6 may occupy 4 OFDM symbols.

In an embodiment, the maximum number of cyclic shift parameters supported by the transmission comb parameter is 8, and a value range of the $n_{SRS}^{cs}$ is $n_{SRS}^{cs} \in \{0, 1, ..., n_{SRS}^{cs,max} - 1\}$. The terminal uses all of the 8 cyclic shift parameters to generate the SRS resource.

In an embodiment, the maximum number of the cyclic shift parameters supported by the transmission comb parameter is 12, and the value range of the $n_{SRS}^{cs}$ is $n_{SRS}^{cs} \in \{0, 1, ..., n_{SRS}^{cs,max} - 1\}$. The terminal uses some cyclic shift parameters among the 12 cyclic shift parameters to generate the SRS resource, that is, the SRS resource is actually generated by using 8 cyclic shift parameters among the 12 cyclic shift parameters.

·The transmission comb parameter $K_{TC}$ is equal to 12.

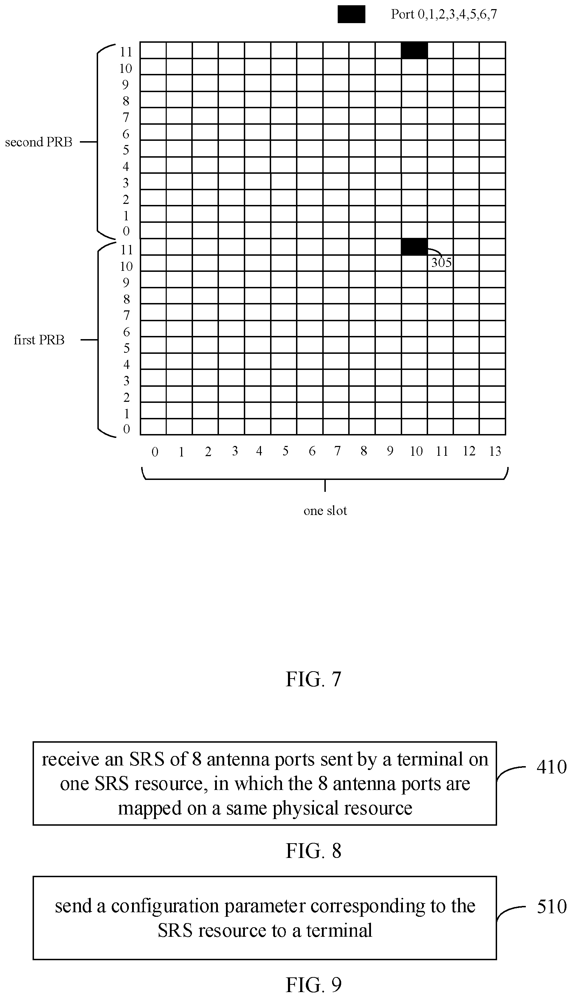

In this case, the value of the transmission comb offset value $\overline{k}_{TC}$ corresponding to the SRS resource is a non-negative integer less than 12. For example, the transmission comb offset value $\overline{k}_{TC}$ may be equal to 0, 1, 2, ..., or 11. As illustrated in FIG. 7, when the transmission comb parameter is equal to 12, the terminal maps one SRS resource onto two PRBs. This SRS resource includes 2 RE resources 305, one RE resource 305 is determined in every 12 consecutive subcarriers, and two adjacent RE resources 305 are separated by 11 subcarriers. The two RE resources 305 each is located on the symbol 10 of one slot. When the transmission comb offset value $\overline{k}_{TC}$ is equal to 11, the two RE resources 305 are respectively located on a subcarrier 11 of a first PRB and a subcarrier 11 of a second PRB. The 8 antenna ports including the port 0, the port 1, the port 2, ..., the port 7 are mapped onto each RE resource 305. In an embodiment, the transmission comb resource in FIG. 7 may occupy 1 OFDM symbol.

In an embodiment, the maximum number of cyclic shift parameters supported by the transmission comb parameter is 8, and a value range of the $n_{\text{SRS}}^{\text{cs}}$ is $n_{\text{SRS}}^{\text{cs}} \in \{0, 1, ..., n_{\text{SRS}}^{\text{cs,max}} - 1\}$. The terminal uses all of the 8 cyclic shift parameters to generate the SRS resource.

In an embodiment, the maximum number of the cyclic shift parameters supported by the transmission comb parameter is 12, and the value range of the $n_{\text{SRS}}^{\text{cs}}$ is $n_{\text{SRS}}^{\text{cs}} \in \{0, 1, ..., n_{\text{SRS}}^{\text{cs,max}} - 1\}$. The terminal uses some cyclic shift parameters among the 12 cyclic shift parameters to generate the SRS resource, that is, the SRS resource is actually generated by using 8 cyclic shift parameters among the 12 cyclic shift parameters.

In some other embodiments, when the transmission comb parameter $K_{TC}$ is equal to 8 or 12, only one SRS resource may be mapped onto only one PRB. Therefore, the bandwidth corresponding to the bandwidth parameter is greater than or equal to the bandwidth of 6 PRBs; or the bandwidth parameter is a multiple of the bandwidth of 6 PRBs; or the bandwidth corresponding to the bandwidth parameter is greater than or equal to the bandwidth of 8 PRBs; or the bandwidth parameter is a multiple of the bandwidth of 8 PRBs. In this way, more than one SRS resource can be mapped onto more than one PRB to avoid that the measurement result of the uplink channel quality is unrepresentative caused by a small number of SRS resources.

In conclusion, with the method for sending an SRS according to embodiments, an implementation of mapping the SRS resource by using a larger transmission comb parameter 8 or 12 is provided to support the sending of the SRS of the 8 antenna ports.

FIG. 8 is a flowchart illustrating a method for receiving an SRS according to an exemplary embodiment of the disclosure. The method is performed by a network device in the communication system in FIG. 1. The method includes the following.

At step 410, an SRS of 8 antenna ports sent on one SRS resource by a terminal is received, in which the 8 antenna ports are mapped onto same physical resources.

The network device receives the SRS of the 8 antenna ports from the same physical resources. The above-mentioned "physical resources" means consecutive carrier resources in a frequency domain. One PRB corresponds to 12 consecutive carriers in the frequency domain and one slot in the time domain.

In an embodiment, an uplink channel includes at least one of a PUCCH or a PUSCH. The terminal may receive the SRS of the 8 antenna ports on the physical resources of the PUCCH and/or the PUSCH.

In conclusion, with the method for receiving an SRS according to embodiments, the received SRS of the 8 antenna ports is an SRS of the 8 antenna ports configured and sent by the terminal on one SRS resource. The method provides support for sending of the SRS of the 8 antenna ports. The method is used to support the implementation of related functions in the case that the terminal uses 8 transmit/sending antenna ports. For example, the method is used to support a codebook based uplink channel quality detection in the case that the terminal uses 8 transmit/sending antenna ports, support a non-codebook based uplink channel quality detection in the case that the terminal uses 8 transmit/sending antenna ports, or support a downlink channel quality detection when performing the antenna switching in the case that the terminal uses 8 transmit/sending antenna ports.

In an embodiment, the terminal configures and sends the SRS of the 8 antenna ports on one SRS resource based on configuration parameter(s). The configuration parameter(s) may be configured by the network device for the terminal. For example, FIG. 9 illustrates a flowchart of a method for configuring parameters according to an exemplary embodiment of the disclosure. The method is performed by a network device in the communication system illustrated in FIG. 1. The method includes the following.

At step 510, the network device sends configuration parameter(s) corresponding to the SRS resource to the terminal.

In some examples, the configuration parameter(s) includes/include: a transmission comb parameter $K_{TC}$ of the SRS resource, where $K_{TC}$ is equal to 2.

When $K_{TC}$ is equal to 2, the configuration parameters may further include at least one of:

a transmission comb offset value $\overline{k}_{TC}$ corresponding to the SRS resource, where a value of $\overline{k}_{TC}$ is a non-negative integer less than 2; or

a maximum number $n_{\text{SRS}}^{\text{cs,max}}$ of cyclic shift parameters supported by the transmission comb parameter being 8, where a value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and all of the 8 cyclic shift parameters are used to generate the SRS resource; or the maximum number $n_{\text{SRS}}^{\text{cs,max}}$ of cyclic shift parameters supported by the transmission comb parameter being 12, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$, and some cyclic shift parameters among the 12 cyclic shift parameters are used to generate the SRS resource.

In some examples, the configuration parameter(s) includes/include: the transmission comb parameter $K_{TC}$ of the SRS resource, where $K_{TC}$ is equal to 4.

When $K_{TC}$ is equal to 4, the configuration parameters may further include at least one of:

the transmission comb offset value $\bar{k}_{TC}$ corresponding to the SRS resource, where the value of $\bar{k}_{TC}$ is a non-negative integer less than 4; or

a maximum number $n_{\text{SRS}}^{\text{cs,max}}$ of cyclic shift parameters supported by the transmission comb parameter being 8, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and all of the 8 cyclic shift parameters are used to generate the SRS resource; or the maximum number $n_{\text{SRS}}^{\text{cs,max}}$ of cyclic shift parameters supported by the transmission comb parameter being 12, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and some cyclic shift parameters among the 12 cyclic shift parameters are used to generate the SRS resource.

In some examples, the configuration parameter(s) includes/include: the transmission comb parameter $K_{TC}$ of the SRS resource, where $K_{TC}$ is equal to 8.

When $K_{TC}$ is equal to 8, the configuration parameters may further include at least one of:

the transmission comb offset value $\bar{k}_{TC}$ corresponding to the SRS resource, where the value of $\bar{k}_{TC}$ is a non-negative integer less than 8; or

a maximum number $n_{\text{SRS}}^{\text{cs,max}}$ of cyclic shift parameters supported by the transmission comb parameter being 8, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and all of the 8 cyclic shift parameters are used to generate the SRS resource; or the maximum number $n_{\text{SRS}}^{\text{cs,max}}$ of cyclic shift parameters supported by the transmission comb parameter being 12, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and some cyclic shift parameters among the 12 cyclic shift parameters are used to generate the SRS resource.

In some examples, the configuration parameter(s) includes/include: the transmission comb parameter $K_{TC}$ of the SRS resource, where $K_{TC}$ is equal to 12.

When $K_{TC}$ is equal to 12, the configuration parameters may further include at least one of:

the transmission comb offset value $\bar{k}_{TC}$ corresponding to the SRS resource, where the value of $\bar{k}_{TC}$ is a non-negative integer less than 12; or

a maximum number $n_{\text{SRS}}^{\text{cs,max}}$ of cyclic shift parameters supported by the transmission comb parameter being 8, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and all of the 8 cyclic shift parameters are used to generate the SRS resource; or the maximum number $n_{\text{SRS}}^{\text{cs,max}}$ of cyclic shift parameters supported by the transmission comb parameter being 12, where the value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$ and some cyclic shift parameters among the 12 cyclic shift parameters are used to generate the SRS resource.

When $K_{TC}$ is equal to 2 or 4, the configuration parameters further include a bandwidth parameter. The bandwidth parameter is greater than or equal to a bandwidth of 4 PRBs; or the bandwidth parameter is a multiple of the bandwidth of 4 PRBs; or the bandwidth parameter is greater than or equal to a bandwidth of 6 PRBs; or the bandwidth parameter is a multiple of the bandwidth of 6 PRBs; or the bandwidth parameter is greater than or equal to a bandwidth of 8 PRBs; or the bandwidth parameter is a multiple of the bandwidth of 8 PRBs. That is, when $K_{TC}$ is equal to 2 or 4, a minimum bandwidth parameter configured for the SRS resource is 4 PRBs.

When $K_{TC}$ is equal to 8 or 12, the configuration parameters further include a bandwidth parameter. The bandwidth parameter is greater than or equal to a bandwidth of 6 PRBs; or the bandwidth parameter is a multiple of the bandwidth of 6 PRBs; or the bandwidth parameter is greater than or equal to a bandwidth of 8 PRBs; or the bandwidth parameter is a multiple of the bandwidth of 8 PRBs. That is, when $K_{TC}$ is equal to 8 or 12, a minimum bandwidth parameter configured for the SRS resource is 6 PRBs. For example, the network device determines a first bandwidth that is greater than or equal to 6 PRBs and sends this configuration parameter, i.e. the first bandwidth, to the terminal. Or, the network device determines a second bandwidth which is the multiple of 8 PRBs and sends this configuration parameter, i.e. the second bandwidth, to the terminal.

In some other embodiments, the configuration parameters further include: a cyclic shift parameter $n_{SRS}^{cs}$ of the SRS, where the $n_{SRS}^{cs}$ is a non-negative integer. For example, the network device configures the cyclic shift parameter $n_{SRS}^{cs}$ for the terminal; or the network device configures 8 cyclic shift parameters corresponding to the 8 antenna ports for the terminal.

That is, before receiving the SRS, the network device sends some or all of the configuration parameters corresponding to the SRS resource to the terminal. In an embodiment, all or some of the above configuration parameters are configured by the network devie for the terminal through a higher layer signaling. For example, all or some of the above configuration parameters are carried in a Radio Resource Control (RRC).

In some other embodiments, the configuration parameters corresponding to the SRS resource may also be defined by a protocol or determined by the terminal. For example, the terminal determines the transmission comb parameter $K_{TC}$ based on its own requirement on an uplink transmission rate, and/or determines the transmission comb parameter $K_{TC}$ based on its own requirement on an uplink transmission quality. As another example, the terminal may actually use all or part of the cyclic shift parameters to generate the SRS resource based on its own requirement. For example, if the maximum number of the cyclic shift parameters supported by the transmission comb parameter is 8 and the terminal sends SRS of 4 antenna ports on the SRS resource, then only 4 cyclic shift parameters in the 8 cyclic shift parameters are used to generate the SRS resource. As another example, if the network device configures a cyclic shift parameter through a higher layer signaling, then the terminal generates SRS sequences corresponding to the 8 ports based on this cyclic shift parameter. Or, all the cyclic shift parameters used to generate the SRS resource are defined by the protocol.

As a side corresponding to the network device, the terminal receives the configuration parameter(s) corresponding to the SRS resource sent by the network device and performs the step 210 based on the configuration parameter(s).

In conclusion, with the method for configuring parameters according to embodiments, the network device configures the configuration parameter(s) corresponding to the SRS resource for the terminal, such that the terminal may more efficiently configure and send the SRS.

In some other embodiments, the network device configures some or all of initial configuration parameters for the terminal and subsequently updates some or all of the configuration parameters configured by the network device. For example, the network device periodically updates some or all of the configuration parameters used when sending the SRS.

In an embodiment, taking the transmission comb parameter as an example, the network device updates the transmission comb parameter for the terminal every hour; or the network device updates the transmission comb parameter for the terminal based on a change of the network environment.

In conclusion, with the method for updating configuration parameters according to embodiments, the SRS transmission is more flexible, different communication requirements may be met and the communication efficiency may be improved.

For example, antenna ports for sending the SRS are extended, and the method is as follows.

8 antenna ports are defined: the number $N_{ap}^{SRS}$ of antenna ports of the SRS is 8; the port numbers of the 8 antenna ports are $P_i$ = 1000 + i, where $i \in \{0, 1, 2, 3, 4, 5, 6, 7\}$.

Method 1: the transmission comb parameter is equal to 2 or 4, which is directly used to support the newly defined SRS of 8 antenna ports.

Method 2: the transmission comb parameter is equal to 8, and the supported maximum number of cyclic shift parameters is expanded to 8 or 12.

If it is supported to extend the maximum number of cyclic shift parameters to 8 (i.e., $n_{\text{SRS}}^{\text{cs,max}} =$ 8), then all of the 8 cyclic shift parameters are used for the same resource element (RE) resources defined by the SRS resource; or

if it is supported to extend the maximum number of cyclic shift parameters 12 (i.e., $n_{\text{SRS}}^{\text{cs,max}} =$ 12), then some cyclic shift parameters among the 12 cyclic shift parameters are used for the same RE resources defined by the SRS resource.

Method 3: the transmission comb parameter is equal to 12, and the supported maximum number of cyclic shift parameters is extended to 8 or 12.

If it is supported to extend the maximum number of cyclic shift parameters 8 (i.e., $n_{\text{SRS}}^{\text{cs,max}} = 8$), then all of the 8 cyclic shift parameters are used for the same resource element (RE) resources defined by the SRS resource; or

if it is supported to extend the maximum number of cyclic shift parameters to 12 (i.e., $n_{\text{SRS}}^{\text{cs,max}} = 12$), then some cyclic shift parameters among the 12 cyclic shift parameters are used for the same RE resources defined by the SRS resource.

The formula for calculating the cyclic shift parameter is as follows:

$$n_{\text{SRS}}^{\text{cs,i}} = \left( n_{\text{SRS}}^{\text{cs}} + \frac{n_{\text{SRS}}^{\text{cs,max}}(p_i - 1000)}{N_{\text{ap}}^{\text{SRS}}} \right) \bmod \ n_{\text{SRS}}^{\text{cs,max}} ;$$

a formula for calculating a cyclic shift value of the cyclic shift is as follows:

$$\alpha_i = 2\pi \frac{n_{\text{SRS}}^{\text{cs,i}}}{n_{\text{SRS}}^{\text{cs,max}}} ;$$

where i in the formula is a positive integer.

The bandwidth parameter (that is, an SRS configuration bandwidth) in the method 3 is greater than or equal to 6 PRBs; or the bandwidth parameter is greater than or equal to 8 PRBs.

In the above methods 1-3, the transmission comb offset value is notified to the terminal by the network device through the RRC signaling.

In conclusion, with the method for sending an SRS according to embodiments, the terminal may map the 8 antenna ports onto the same physical resources, and configure and send the SRS of the 8 antenna ports on one SRS resource. The method is used to support the implementation of related functions in the case that the terminal uses 8 transmit/sending antenna ports. For example, the method is used to support a codebook based uplink channel quality detection in the case that the terminal uses 8 transmit/sending antenna ports, support a non-codebook based uplink channel quality detection in the case that the terminal uses 8 transmit/sending antenna ports, or support a downlink channel quality detection when performing the antenna switching in the case that the terminal uses 8 transmit/sending antenna ports.

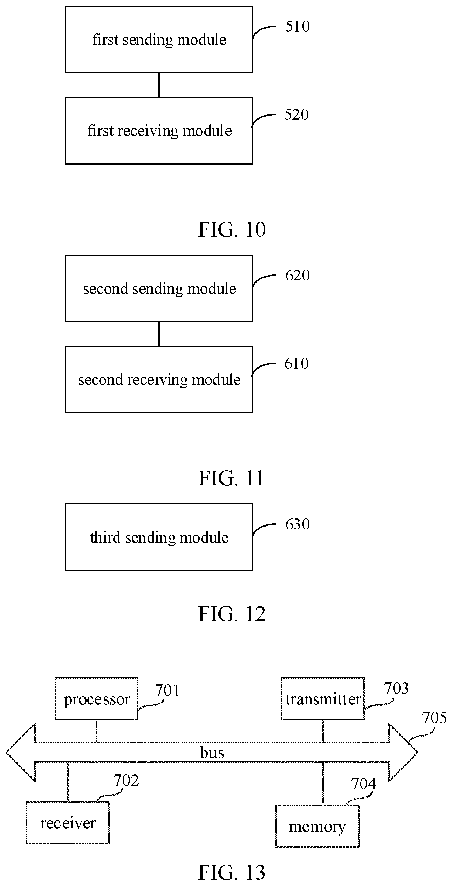

FIG. 10 is a block diagram illustrating an apparatus for sending an SRS according to an exemplary embodiment of the disclosure. The apparatus may be implemented as part or all of a UE by using software, hardware, or a combination of the two. The apparatus includes a first sending module 510.

The first sending module 510 is configured to configure and send an SRS of 8 antenna ports on one SRS resource, in which the 8 antenna ports are mapped onto same physical resources.

In some embodiments, a transmission comb parameter $K_{TC}$ of the SRS resource is equal to 8.

In some embodiments, a transmission comb offset value $k_{\text{TC}}$ corresponding to the SRS resource is a non-negative integer less than 8.

In some embodiments, a maximum number $n_{\text{SRS}}^{\text{cs,max}}$ of cyclic shift parameters supported by the transmission comb parameter is 8, where a value range of the $n_{\text{SRS}}^{\text{cs,max}}$ is $n_{\text{SRS}}^{\text{cs}} \in \{0, 1, \ldots, n_{\text{SRS}}^{\text{cs,max}} - 1\}$.

In some embodiments, the SRS resource is generated by using all of the 8 cyclic shift parameters.

In some embodiments, a maximum number $n_{\text{SRS}}^{\text{cs,max}}$ of cyclic shift parameters supported by the transmission comb parameter is 12, where the value range of the $n_{\text{SRS}}^{\text{cs,max}}$ is $n_{\text{SRS}}^{\text{cs}} \in \{0,1,...,n_{\text{SRS}}^{\text{cs,max}} - 1\}$.

In some embodiments, the SRS resource is generated using some cyclic shift parameters among the 12 cyclic shift parameters.

In some embodiments, the transmission comb parameter $K_{TC}$ of the SRS resource is equal to 12.

In some embodiments, a transmission comb offset value $\overline{k}_{\text{TC}}$ corresponding to the SRS resource is a non-negative integer less than 12.

In some embodiments, a maximum number $n_{\text{SRS}}^{\text{cs,max}}$ of cyclic shift parameters supported by the transmission comb parameter is 8, where a value range of the $n_{\text{SRS}}^{\text{cs,max}}$ is $n_{\text{SRS}}^{\text{cs}} \in \{0,1,...,n_{\text{SRS}}^{\text{cs,max}} - 1\}$.

In some embodiments, the SRS resource is generated by using all of the 8 cyclic shift parameters.

In some embodiments, a maximum number $n_{\text{SRS}}^{\text{cs,max}}$ of cyclic shift parameters supported by the transmission comb parameter is 12, where the value range of the $n_{\text{SRS}}^{\text{cs,max}}$ is $n_{\text{SRS}}^{\text{cs}} \in \{0,1,...,n_{\text{SRS}}^{\text{cs,max}} - 1\}$.

In some embodiments, the SRS resource is generated by using some cyclic shift parameters among the 12 cyclic shift parameters.

In some embodiments, the bandwidth parameter is greater than or equal to a bandwidth of 6 PRBs; or

the bandwidth parameter is a multiple of 6 PRBs; or
the bandwidth parameter is greater than or equal to a bandwidth of 8 PRBs; or
the bandwidth parameter is a multiple of 8 PRBs.

In some embodiments, the transmission comb parameter of the SRS resource is equal to 2; or
the transmission comb parameter is equal to 4.

In some embodiments, the apparatus further includes:
a first receiving module 520, configured to receive configuration parameter(s) corresponding to the SRS resource sent by the network device.

In some embodiments, the configuration parameter(s) corresponding to the SRS resource includes /include at least one of:

the transmission comb parameter $K_{TC}$ of the SRS resource;
the transmission comb offset value $\overline{k}_{\text{TC}}$ corresponding to the SRS resource; or
the number of antenna ports of the SRS.

In some embodiments, the number of antenna ports of the SRS is $N_{ap}^{SRS} = 8$.

Port numbers of the 8 antenna ports are $P_i = 1000 + i, i \in \{0, 1, 2, 3, 4, 5, 6, 7\}$.

In some embodiments, the apparatus further includes:

a first receiving module 520, configured to receive a cyclic shift parameter $n_{SRS}^{cs}$ of the SRS configured by the network device for the terminal, where $n_{SRS}^{cs}$ is a non-negative integer.

In some embodiments, the transmission comb offset value corresponding to the SRS resource is carried in an RRC signalling.

In some embodiments, a function of the SRS resource is one of:

a codebook;
an antenna switching; and
a non-codebook.

FIG. 11 is a block diagram illustrating an apparatus for receiving an SRS according to an exemplary embodiment of the disclosure. The apparatus may be implemented as part or all of a network device by using software, hardware, or a combination of the two. The apparatus includes a second receiving module 610.

The second receiving module 610 is configured to receive an SRS of 8 antenna ports sent on one SRS resource by a terminal. The 8 antenna ports are mapped onto same physical resources.

In some embodiments, the apparatus includes a second sending module 620.

The second sending module 620 is configured to send configuration parameter(s) corresponding to the SRS resource to the terminal.

In some embodiments, the configuration parameter(s) includes/include:

a transmission comb parameter $K_{TC}$ of the SRS resource, where $K_{TC}$ is equal to 8.

In some embodiments, the configuration parameter(s) includes/include:

a transmission comb offset value $\overline{k}_{TC}$ corresponding to the SRS resource, where $\overline{k}_{TC}$ is a non-negative integer less than 8.

In some embodiments, a maximum number $n_{SRS}^{cs,max}$ of cyclic shift parameters supported by the transmission comb parameter is 8, and a value range of the $n_{SRS}^{cs,max}$ is $n_{SRS}^{cs} \in \{0,1,\dots,n_{SRS}^{cs,max}-1\}$.

In some embodiments, the SRS resource is generated by using all of the 8 cyclic shift parameters.

In some embodiments, a maximum number $n_{SRS}^{cs,max}$ of cyclic shift parameters supported by the transmission comb parameter is 12, and the value range of the $n_{SRS}^{cs,max}$ is $n_{SRS}^{cs} \in \{0,1,\dots,n_{SRS}^{cs,max}-1\}$.

In some embodiments, the SRS resource is generated by using some cyclic shift parameters among the 12 cyclic shift parameters.

In some embodiments, the configuration parameter(s) includes/include:

the transmission comb parameter $K_{TC}$ of the SRS resource, where $K_{TC}$ is equal to 12.

In some embodiments, the configuration parameter(s) includes/include:

the transmission comb offset value $\overline{k}_{TC}$ corresponding to the SRS resource, where $\overline{k}_{TC}$ is a non-negative integer less than 12.

In some embodiments, a maximum number $n_{SRS}^{cs,max}$ of cyclic shift parameters supported by the transmission comb parameter is 8, and a value range of the $n_{SRS}^{cs,max}$ is $n_{SRS}^{cs} \in \{0,1,\dots,n_{SRS}^{cs,max}-1\}$.

In some embodiments, the SRS resource is generated by using all of the 8 cyclic shift parameters.

In some embodiments, a maximum number $n_{SRS}^{cs,max}$ of cyclic shift parameters supported by the transmission comb parameter is 12, and the value range of the $n_{SRS}^{cs,max}$ is $n_{SRS}^{cs} \in \{0,1,\dots,n_{SRS}^{cs,max}-1\}$.

In some embodiments, the SRS resource is generated using some cyclic shift parameters among the 12 cyclic shift parameters.

In some embodiments, the configuration parameter(s) includes/include:

a bandwidth parameter corresponding to the SRS.

The bandwidth parameter is greater than or equal to a bandwidth of 6 PRBs; or the bandwidth parameter is a multiple of 6 PRBs; or the bandwidth parameter is greater than or equal to a bandwidth of 8 PRBs; or the bandwidth parameter is a multiple of 8 PRBs.

In some embodiments, the configuration parameter(s) includes/include:

the transmission comb parameter $K_{TC}$ of the SRS resource, where $K_{TC}$ is equal to 2 or 4.

In some embodiments, the configuration parameter(s) includes/include:

a cyclic shift parameter $n_{SRS}^{cs}$ of the SRS, where $n_{SRS}^{cs}$ is a non-negative integer.

In some embodiments, the apparatus includes:

a second sending module 620, configured to send the transmission comb offset value corresponding to the SRS resource to the terminal through an RRC signalling.

FIG. 12 is a block diagram illustrating an apparatus for configuring parameters according to an exemplary embodiment of the disclosure. The apparatus may be implemented as part or all of a network device by using software, hardware, or a combination of the two. The apparatus includes a third sending module 630.

The third sending module 630 is configured to send configuration parameter(s) corresponding to an SRS resource to the terminal.

In some embodiments, the configuration parameter(s) includes/include:

a transmission comb parameter of the SRS resource, where the transmission comb parameter is equal to 8.

In some embodiments, the configuration parameter(s) includes/include:

a transmission comb parameter $K_{TC}$ of the SRS resource, where $K_{TC}$ is equal to 8.

In some embodiments, a maximum number $n_{\text{SRS}}^{\text{cs,max}}$ of cyclic shift parameters supported by the transmission comb parameter is 8, and a value range of the $n_{\text{SRS}}^{\text{cs,max}}$ is $n_{\text{SRS}}^{\text{cs}} \in \{0, 1, \dots, n_{\text{SRS}}^{\text{cs,max}} - 1\}$.

In some embodiments, the SRS resource is generated by using all of the 8 cyclic shift parameters.

In some embodiments, a maximum number $n_{\text{SRS}}^{\text{cs,max}}$ of cyclic shift parameters supported by the transmission comb parameter is 12, and the value range of of $n_{\text{SRS}}^{\text{cs,max}}$ is $n_{\text{SRS}}^{\text{cs}} \in \{0, 1, \dots, n_{\text{SRS}}^{\text{cs,max}} - 1\}$.

In some embodiments, the SRS resource is generated by using some cyclic shift parameters among the 12 cyclic shift parameters.

In some embodiments, the configuration parameter(s) includes/include: the transmission comb parameter $\mathbf{K}_{TC}$ of the SRS resource, where $\mathbf{K}_{TC}$ is equal to 12.

In some embodiments, the configuration parameter(s) includes/include: the transmission comb offset value $\overline{k}_{\text{TC}}$ corresponding to the SRS resource, where $\overline{k}_{\text{TC}}$ is a non-negative integer less than 12.

In some embodiments, a maximum number $n_{\text{SRS}}^{\text{cs,max}}$ of cyclic shift parameters supported by the transmission comb parameter is 8, and the value range of the $n_{\text{SRS}}^{\text{cs,max}}$ is $n_{\text{SRS}}^{\text{cs}} \in \{0, 1, \dots, n_{\text{SRS}}^{\text{cs,max}} - 1\}$.

In some embodiments, the SRS resource is generated by using all of the 8 cyclic shift parameters.

In some embodiments, the maximum number $n_{\text{SRS}}^{\text{cs,max}}$ of cyclic shift parameters supported by the transmission comb parameter is 12, and the value range of the $n_{\text{SRS}}^{\text{cs,max}}$ is $n_{\text{SRS}}^{\text{cs}} \in \{0, 1, \dots, n_{\text{SRS}}^{\text{cs,max}} - 1\}$.

In some embodiments, the SRS resource is generated by using some cyclic shift parameters among the 12 cyclic shift parameters.

In some embodiments, the configuration parameter(s) includes/include: a bandwidth parameter corresponding to the SRS.

The bandwidth parameter is greater than or equal to a bandwidth of 6 PRBs; or the bandwidth parameter is a multiple of 6 PRBs; or the bandwidth parameter is greater than or equal to a bandwidth of 8 PRBs; or the bandwidth parameter is a multiple of 8 PRBs.

In some embodiments, the configuration parameter(s) includes/include: the transmission comb parameter $\mathbf{K}_{TC}$ of the SRS resource, where $\mathbf{K}_{TC}$ is equal to 2 or 4.

In some embodiments, the configuration parameter(s) includes/include: a cyclic shift parameter $n_{SRS}^{cs}$ of the SRS, where $n_{SRS}^{cs}$ is a non-negative integer.

FIG. 13 is a structural diagram illustrating a UE according to an exemplary embodiment. The UE includes a processor 701, a receiver 702, a transmitter 703, a memory 704 and a bus 705.

The processor 701 includes one or more processing cores, and the processor 701 executes various function applications and information processing by running a software program or a module.

The receiver 702 and the transmitter 703 may be implemented as a communication component, which may be a communication chip.

The memory 704 is communicatively coupled to the processor 701 through the bus 705.

The memory 704 may be configured to store at least one instruction, and the processor 701 is configured to execute the at least one instruction to implement all blocks in above embodiments.

In addition, the memory 704 may be implemented by any type of volatile or non-volatile storage device or their combination. The volatile or non-volatile storage device includes but not limited to a magnetic disk or an optical disk, an electrically erasable programmable read only memory (EEPROM), an erasable programmable read only memory (EPROM), a static random-access memory (SRAM), a read only memory (ROM), a magnetic memory, a flash memory and a programmable read only memory (PROM).

In an exemplary embodiment, a non-transitory computer readable storage medium is further provided. The non-transitory computer readable storage medium includes instructions, such as the memory including instructions. The instructions may be executed by the processor of the UE to perform the above methods for sending an SRS. For example, the non-transitory computer readable storage medium may be a ROM, a random-access memory (RAM), a compact disc ROM (CD ROM), a magnetic tape, a floppy disk, an optical data storage device, or the like.

**EP 4 489 322 A1**

A non-transitory computer readable storage medium is further provided. When the instructions in the non-transitory computer readable storage medium are executed by the processor of the UE, the UE is caused to execute the methods for sending an SRS.

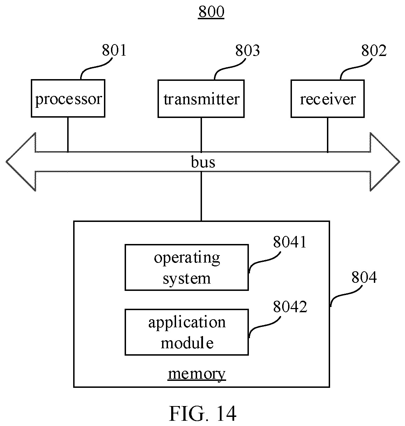

FIG. 14 is a block diagram illustrating a network device 800 according to an example embodiment. The network device 800 may be a base station.

The network device 800 may include a processor 801, a receiver 802, a transmitter 803 and a memory 804. The receiver 802, the transmitter 803 and the memory 804 are connected to a processor 801 through a bus.

The processor 801 include one or more processing cores, and the processor 801 executes the methods for receiving an SRS in embodiments of the disclosure by running a software program or a module. The memory 804 may be configured to store a software program and a module. Specifically, the memory 804 may store an operating system 8041 and an application module 8042 required by at least one function. The receiver 802 is configured to receive the communication data transmitted by other devices, and the transmitter 803 is configured to transmit the communication data transmitted by other devices.

One example embodiment of the disclosure further provides a computer readable storage medium, in which the computer readable storage medium stores at least one instruction, at least one program, a code set or an instruction set. The at least one program, the at least one program, the code set or the instruction set are loaded and executed by the processor to implement the methodsfor sending an SRS or the methods for receiving an SRS in method embodiments.

A computer program product is provided according to embodiments of the disclosure. The computer program product includes computer instructions. The computer instructions are stored in a computer readable storage medium. A processor of a computer device reads the computer instructions from the computer readable storage medium, and the processor executes the computer instructions, so that the computer device executes the methods for sending an SRS or the methods for receiving an SRS according to method embodiments.

It should be understood that, "more than one" mentioned in this disclosure refers to two or more. "and/or", describes the relationship of the association objects, indicating that there may exist three relationships, for example, A and/or B, may represent: any of existing A only, existing both A and B, or existing B only. The character "/" generally means the contextual object is a kind of "or" relationship.

After considering the specification and practicing the disclosure herein, those skilled in the art will easily think of other implementations. The present application is intended to cover any variations, usages, or adaptive changes of the disclosure. These variations, usages, or adaptive changes follow the general principles of the disclosure and include common knowledge or conventional technical means in the technical field not disclosed by the disclosure. The description and embodiments are to be regarded as exemplary only, and the true scope and spirit of the disclosure are given by the appended claims.

It is understandable that the disclosure is not limited to the precise structure described above and shown in the drawings, and various modifications and changes may be made without departing from its scope. The scope of the present application is only limited by the appended claims. The scope of the present application is only limited by the appended claims.

**Claims**

1.    A method for sending a Sounding Reference Signal (SRS), performed by a terminal, comprising:
configuring and sending an SRS of 8 antenna ports on one SRS resource, wherein the 8 antenna ports are mapped onto same physical resources.

2.    The method of claim 1, wherein a transmission comb parameter $K_{TC}$ of the SRS resource is equal to 8.

3.    The method of claim 2, wherein a transmission comb offset value $\overline{k}_{TC}$ corresponding to the SRS resource is a non-negative integer less than 8.

4.    The method of claim 2, wherein a maximum number $n_{SRS}^{cs,max}$ of cyclic shift parameters supported by the transmission comb parameter is 8, and a value range of the $n_{SRS}^{cs,max}$ is $n_{SRS}^{cs} \in \{0,1,...,n_{SRS}^{cs,max}-1\}$.

5.    The method of claim 4, wherein the SRS resource is generated using all of the 8 cyclic shift parameters.

**6.** The method of claim 2, wherein a maximum number $n_{\mathrm{SRS}}^{\mathrm{cs,max}}$ of cyclic shift parameters supported by the transmission comb parameter is 12, and a value range of the $n_{\mathrm{SRS}}^{\mathrm{cs,max}}$ is $n_{\mathrm{SRS}}^{\mathrm{cs}} \in \{0,1,\dots,n_{\mathrm{SRS}}^{\mathrm{cs,max}} - 1\}$.

**7.** The method of claim 6, wherein the SRS resource is generated using some cyclic shift parameters among the 12 cyclic shift parameters.

**8.** The method of claim 1, wherein a transmission comb parameter $K_{TC}$ of the SRS resource is equal to 12.

**9.** The method of claim 8, a transmission comb offset value $\overline{k}_{\mathrm{TC}}$ corresponding to the SRS resource is a non-negative integer less than 12.

**10.** The method of claim 8, wherein a maximum number $n_{\mathrm{SRS}}^{\mathrm{cs,max}}$ of cyclic shift parameters supported by the transmission comb parameter is 8, and a value range of the $n_{\mathrm{SRS}}^{\mathrm{cs,max}}$ is $n_{\mathrm{SRS}}^{\mathrm{cs}} \in \{0,1,\dots,n_{\mathrm{SRS}}^{\mathrm{cs,max}} - 1\}$.

**11.** The method of claim 10, wherein the SRS resource is generated using all of the 8 cyclic shift parameters.

**12.** The method of claim 8, wherein a maximum number $n_{\mathrm{SRS}}^{\mathrm{cs,max}}$ of cyclic shift parameters supported by the transmission comb parameter is 12, and a value range of the $n_{\mathrm{SRS}}^{\mathrm{cs,max}}$ is $n_{\mathrm{SRS}}^{\mathrm{cs}} \in \{0,1,\dots,n_{\mathrm{SRS}}^{\mathrm{cs,max}} - 1\}$.

**13.** The method of claim 12, wherein the SRS resource is generated using some cyclic shift parameters among the 12 cyclic shift parameters.

**14.** The method of claim 8, wherein

a bandwidth parameter is greater than or equal to a bandwidth of 6 Physical Resource Blocks (PRBs); or
the bandwidth parameter is a multiple of 6 PRBs; or
the bandwidth parameter is greater than or equal to a bandwidth of 8 PRBs; or
the bandwidth parameter is a multiple of 8 PRBs.

**15.** The method of claim 1, wherein

a transmission comb parameter of the SRS resource is equal to 2; or
a transmission comb parameter is equal to 4.

**16.** The method of any one of claims 1 to 15, wherein before configuring and sending the SRS of the 8 antenna ports on one SRS resource, the method comprises:
receiving a configuration parameter corresponding to the SRS resource sent by a network device.

**17.** The method of claim 16, wherein the configuration parameter corresponding to the SRS resource comprises at least one of:

a transmission comb parameter $K_{TC}$ of the SRS resource;
a transmission comb offset value $\overline{k}_{\mathrm{TC}}$ corresponding to the SRS resource; or
a number of antenna ports of the SRS.

**18.** The method of any one of claims 1 to 15, wherein

a number of antenna ports of the SRS is $N_{ap}^{SRS} = 8$; and
port numbers of the 8 antenna ports is $P_i = 1000 + i$, $i \in \{0, 1, 2, 3, 4, 5, 6, 7\}$.

19. The method of any one of claims 1 to 15, wherein before sending the SRS of the 8 antenna ports on one SRS resource, the method comprises:

receiving a cyclic shift parameter $n_{SRS}^{cs}$ of the SRS configured by the network device for the terminal, wherein $n_{SRS}^{cs}$ is a non-negative integer.

20. The method of any one of claims 2 to 15, wherein a transmission comb offset value corresponding to the SRS resource is carried in a Radio Resource Control (RRC) signaling.

21. The method of any one of claims 1 to 15, wherein a function of the SRS resource is one of:

    codebook;
    antenna switching; or
    non-codebook.

22. A method for receiving a Sounding Reference Signal (SRS), performed by a network device, comprising:
receiving an SRS of 8 antenna ports sent on one SRS resource by a terminal, wherein the 8 antenna ports are mapped onto same physical resources.

23. The method of claim 22, wherein before receiving the SRS of the 8 antenna ports sent on the SRS resource by the terminal, the method comprises:
sending a configuration parameter corresponding to the SRS resource to the terminal.

24. The method of claim 23, wherein the configuration parameter comprises:
a transmission comb parameter $K_{TC}$ of the SRS resource, wherein $K_{TC}$ is equal to 8.

25. The method of claim 24, wherein the configuration parameter comprises:
a transmission comb offset value $\overline{k}_{TC}$ corresponding to the SRS resource, wherein $\overline{k}_{TC}$ is a non-negative integer less than 8.

26. The method of claim 24, wherein a maximum number $n_{SRS}^{cs,max}$ of cyclic shift parameters supported by the transmission comb parameter is 8, and a value range of the $n_{SRS}^{cs,max}$ is $n_{SRS}^{cs} \in \{0,1,...,n_{SRS}^{cs,max} - 1\}$.

27. The method of claim 26, wherein the SRS resource is generated using all of the 8 cyclic shift parameters.

28. The method of claim 24, wherein a maximum number $n_{SRS}^{cs,max}$ of cyclic shift parameters supported by the transmission comb parameter is 12, and a value range of the $n_{SRS}^{cs,max}$ is $n_{SRS}^{cs} \in \{0,1,...,n_{SRS}^{cs,max} - 1\}$.

29. The method of claim 28, wherein the SRS resource is generated using some cyclic shift parameters among the 12 cyclic shift parameters.

30. The method of claim 23, wherein the configuration parameter comprises:
a transmission comb parameter $K_{TC}$ of the SRS resource, wherein $K_{TC}$ is equal to 12.

31. The method of claim 30, wherein the configuration parameter comprises:
a transmission comb offset value $\overline{k}_{TC}$ corresponding to the SRS resource, wherein $\overline{k}_{TC}$ is a non-negative integer less than 12.

32. The method of claim 30, wherein a maximum number $n_{SRS}^{cs,max}$ of cyclic shift parameters supported by the transmission comb parameter is 8, and a value range of the $n_{SRS}^{cs,max}$ is $n_{SRS}^{cs} \in \{0,1,...,n_{SRS}^{cs,max} - 1\}$.

33. The method of claim 32, wherein the SRS resource is generated using all of the 8 cyclic shift parameters.

34. The method of claim 30, wherein a maximum number $n_{\mathrm{SRS}}^{\mathrm{cs,max}}$ of cyclic shift parameters supported by the transmission comb parameter is 12, and a value range of the $n_{\mathrm{SRS}}^{\mathrm{cs,max}}$ is $n_{\mathrm{SRS}}^{\mathrm{cs}} \in \{0,1,\dots,n_{\mathrm{SRS}}^{\mathrm{cs,max}} - 1\}$.

35. The method of claim 34, wherein the SRS resource is generated using some cyclic shift parameters among the 12 cyclic shift parameters.

36. The method of claim 30, wherein the configuration parameter comprises:

    a bandwidth parameter corresponding to the SRS;
    wherein the bandwidth parameter is greater than or equal to a bandwidth of 6 Physical Resource Blocks (PRBs); or the bandwidth parameter is a multiple of 6 PRBs; or the bandwidth parameter is greater than or equal to a bandwidth of 8 PRBs; or the bandwidth parameter is a multiple of 8 PRBs.

37. The method of claim 23, wherein the configuration parameter comprises:
    a transmission comb parameter $\boldsymbol{K}_{TC}$ of the SRS resource, wherein $\boldsymbol{K}_{TC}$ is equal to 2 or 4.

38. The method of any one of claims 23 to 37, wherein the configuration parameter comprises:

    a cyclic shift parameter $n_{SRS}^{cs}$ of the SRS, wherein $n_{SRS}^{cs}$ is a non-negative integer.

39. The method of any one of claims 24 to 37, further comprising:
    sending a transmission comb offset value corresponding to the SRS resource to the terminal through a Radio Resource Control (RRC) signalling.

40. An apparatus for sending a sounding reference signal (SRS), comprising:
    a first sending module, configured to configure and send an SRS of 8 antenna ports on one SRS resource, wherein the 8 antenna ports are mapped onto same physical resources.

41. An apparatus for receiving a sounding reference signal (SRS), comprising:
    a second receiving module, configured to receive an SRS of 8 antenna ports sent on one SRS resource by a terminal, wherein the 8 antenna ports are mapped onto same physical resources.

42. A terminal, comprising:

    a processor; and
    a transceiver connected to the processor;
    wherein the processor is configured to load and execute executable instructions to perform the method for sending a sounding reference signals (SRS) of any one of claims 1 to 21.

43. A network device, comprising:

    a processor; and
    a transceiver connected to the processor;
    wherein the processor is configured to load and execute executable instructions to perform the method for receiving a sounding reference signal (SRS) of any one of claims 22 to 39.

44. A computer readable storage medium, wherein the computer readable storage medium has at least one instruction, at least one program, a code set or an instruction set stored thereon, and the at least one instruction, the at least one program, the code set or the instruction set are loaded and executed by a processor to perform the method for sending a sounding reference signal (SRS) of any one of claims 1 to 21 or the method for receiving a SRS of any one of claims 22 to 39.

45. A computer program product, wherein the computer program product comprises computer instructions, the computer instructions are stored in a computer readable storage medium; a processor of a computer device reads the computer instructions from the computer readable storage medium, and the processor executes the computer instructions, to cause the computer device to perform the method for sending a sounding reference signal (SRS) of any one of claims 1 to 21 or the method for receiving a SRS of any one of claims 22 to 39.

access network 12

120

14

access network 12

120

FIG. 1

| configure and send an SRS of 8 antenna ports on one SRS resource, in which the 8 antenna ports are mapped on a same physical resource |
|---|

210

FIG. 2

Port 0,1,2,3,4,5,6,7

FIG. 3

Port 0,1,2,3,4,5,6,7

FIG. 4

FIG. 5

FIG. 6

■ Port 0,1,2,3,4,5,6,7

FIG. 7

receive an SRS of 8 antenna ports sent by a terminal on one SRS resource, in which the 8 antenna ports are mapped on a same physical resource — 410

FIG. 8

send a configuration parameter corresponding to the SRS resource to a terminal — 510

FIG. 9

first sending module ⟋ 510

first receiving module ⟋ 520

FIG. 10

second sending module ⟋ 620

second receiving module ⟋ 610

FIG. 11

third sending module ⟋ 630

FIG. 12

processor ⟋701    transmitter ⟋703

705

bus

⟋702    ⟋704

receiver    memory

FIG. 13

800

801       803       802

| processor | transmitter | receiver |

bus

operating system   8041

application module   8042

804

memory

FIG. 14

## INTERNATIONAL SEARCH REPORT

| International application No. |
|---|
| **PCT/CN2022/078907** |

**A. CLASSIFICATION OF SUBJECT MATTER**

H04B 7/06(2006.01)i

According to International Patent Classification (IPC) or to both national classification and IPC

**B. FIELDS SEARCHED**

Minimum documentation searched (classification system followed by classification symbols)

H04L; H04B; H04W

Documentation searched other than minimum documentation to the extent that such documents are included in the fields searched

Electronic data base consulted during the international search (name of data base and, where practicable, search terms used)

CNTXT, CJFD, ENTXT, VEN, 3GPP: 探测参考信号, 探测信号, SRS, 8, 八, 天线, 端口, 终端, 用户设备, sounding reference signal, eight, antenna, antennae, port, UE

**C. DOCUMENTS CONSIDERED TO BE RELEVANT**

| Category* | Citation of document, with indication, where appropriate, of the relevant passages | Relevant to claim No. |
|---|---|---|
| X | CN 110168954 A (QUALCOMM INC.) 23 August 2019 (2019-08-23) claims 1-72, and description, paragraphs [0095]-[0140] | 1-45 |
| X | US 2021112498 A1 (QUALCOMM INC.) 15 April 2021 (2021-04-15) description, paragraphs 5-98 | 1-45 |
| A | EP 3820102 A1 (FRAUNHOFER GES FORSCHUNG) 12 May 2021 (2021-05-12) entire document | 1-45 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **11 November 2022** | **18 November 2022** |

| Name and mailing address of the ISA/CN | Authorized officer |
|---|---|
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/078907**

| Patent document cited in search report | | | Publication date (day/month/year) | Patent family member(s) | | | Publication date (day/month/year) |
|---|---|---|---|---|---|---|---|
| CN | 110168954 | A | 23 August 2019 | TW | 201832507 | A | 01 September 2018 |
| | | | | US | 2021135823 | A1 | 06 May 2021 |
| | | | | EP | 3566334 | A1 | 13 November 2019 |
| | | | | WO | 2018126474 | A1 | 12 July 2018 |
| | | | | WO | 2018127171 | A1 | 12 July 2018 |
| US | 2021112498 | A1 | 15 April 2021 | CN | 114503446 | A | 13 May 2022 |
| | | | | EP | 4042647 | A1 | 17 August 2022 |
| | | | | WO | 2021072160 | A1 | 15 April 2021 |
| EP | 3820102 | A1 | 12 May 2021 | US | 2022271982 | A1 | 25 August 2022 |
| | | | | EP | 3820101 | A1 | 12 May 2021 |
| | | | | WO | 2021089732 | A1 | 14 May 2021 |
| | | | | EP | 4055789 | A1 | 14 September 2022 |

Form PCT/ISA/210 (patent family annex) (January 2015)